(19) Europäisches Patentamt
European Patent Office
Office européen des brevets

(11) **EP 3 359 798 B1**

(12) **EUROPÄISCHE PATENTSCHRIFT**

(45) Veröffentlichungstag und Bekanntmachung des Hinweises auf die Patenterteilung:
**30.10.2019   Patentblatt 2019/44**

(21) Anmeldenummer: **16763021.9**

(22) Anmeldetag: **07.09.2016**

(51) Int Cl.:
*F02M 26/54* *(2016.01)*        *F16K 31/524* *(2006.01)*
*F16K 31/04* *(2006.01)*        *F02M 26/67* *(2016.01)*
*F16K 31/53* *(2006.01)*        *F16K 1/44* *(2006.01)*

(86) Internationale Anmeldenummer:
**PCT/EP2016/071068**

(87) Internationale Veröffentlichungsnummer:
**WO 2017/060022 (13.04.2017 Gazette 2017/15)**

(54) **VENTIL FÜR EINEN VERBRENNUNGSMOTOR**

VALVE FOR AN INTERNAL COMBUSTION ENGINE

VANNE POUR UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2015   DE 102015116872**

(43) Veröffentlichungstag der Anmeldung:
**15.08.2018   Patentblatt 2018/33**

(73) Patentinhaber: **Pierburg GmbH**
**41460 Neuss (DE)**

(72) Erfinder:
• **GEIGER, Richard**
  **47269 Duisburg (DE)**
• **HAASE, Timo**
  **47441 Moers (DE)**

(74) Vertreter: **Patentanwälte ter Smitten Eberlein-Van Hoof Rütten**
**Partnerschaftsgesellschaft mbB**
**Burgunderstraße 29**
**40549 Düsseldorf (DE)**

(56) Entgegenhaltungen:
EP-A1- 1 319 879        EP-A1- 1 477 062
EP-A2- 1 362 985        EP-A2- 1 378 655
WO-A1-2009/124809        KR-A- 20120 042 120

**Beschreibung**

Die vorliegende Erfindung betrifft ein Ventil für einen Verbrennungsmotor. Das Ventil weist ein Ventilgehäuse mit einem Einlass und einem Auslass, ein Stellglied, welches eine Öffnung zwischen dem Einlass und dem Auslass öffnet oder schließt und eine Antriebswelle eines Drehantriebes, welche ein Antriebsrad exzentrisch dreht, auf. Ventile für Verbrennungsmotoren, welche ein Stellglied aufweisen sind hinlänglich aus dem Stand der Technik bekannt. Solche Ventile dienen beispielsweise zur Regelung einer in die Verbrennungsräume eines Verbrennungsmotors zurückgeführten Abgasmenge zur Reduzierung von Schadstoffemissionen. EP 1 362 985 A2, KR 2012 0042120 A und EP 1 477 062 A1 offenbaren ähnliche Ventile mit Aktuatoren mit exzentrischen Verbindungen.

In der WO 2009/124809 A1 ist beispielsweise ein Ventil für Verbrennungsmotoren mit einem Stellglied offenbart. Bei diesem Ventil treibt ein Drehantrieb über eine Antriebswelle einen Exzenterstift an, auf welchem ein Planetenrad befestigt ist, das mit einem innenverzahnten Hohlrad kämmt. Das Hohlrad ist koaxial zur Antriebswelle des Drehantriebs angeordnet. Das Planetenrad ist fest mit einem Mitnehmer verbunden, welcher exzentrisch zu dem Planetenrad mit dem Stellglied verbunden ist und dieses betätigt. Während eines Umlaufes des Planetenrades im Hohlrad bewegt sich die Verbindungsstelle zwischen Mitnehmer und Stellglied entlang der Mittelachse des Stellgliedes. Das Stellglied wird dabei von einer Schließposition über eine maximale Öffnungsposition zurück zur Schließposition bewegt.

Damit das Stellglied bei diesem Stand der Technik eine geradlinige translatorische Bewegung vollziehen kann, müssen viele Toleranzen eingehalten werden. Dadurch wird die Herstellung eines solchen Ventils sehr aufwendig und teuer.

Desweiteren nimmt ein solches Ventil bei großen Hüben viel Platz ein, da sich ein Hub des Stellgliedes aus dem Durchmesser des Hohlrades ergibt.

Die Aufgabe der vorliegenden Erfindung liegt darin, ein platzsparendes Ventil für einen Verbrennungsmotor zu schaffen, welches einen großen Ventilhub aufweist und welches wirtschaftlich herstellbar ist.

Diese Aufgabe wird durch ein Ventil für einen Verbrennungsmotor mit den Merkmalen des Anspruchs 1 gelöst.

Erfindungsgemäß weist das Ventil zusätzlich zu dem Antriebsrad ein gleich großes Abtriebsrad auf, welches mit dem Antriebsrad bewegungsgekoppelt ist. Dieses Abtriebsrad dreht eine exzentrisch und mechanisch damit verbundene Mitnehmerwelle, die das Stellglied betätigt. Ein Mittel hält einen Abstand zwischen dem Antriebsrad und dem Abtriebsrad konstant. Erfindungsgemäß ist das Antriebsrad und das Abtriebsrad derart angeordnet, dass eine Mittelachse des Stellgliedes, in jeder Position des Antriebsrades, die Antriebswelle und die Mitnehmerwelle schneidet. Durch die erfindungsgemäße Anordnung des Abtriebsrades müssen lediglich Toleranzen bei der Herstellung des Antriebs- und Abtriebsrades und dem Ausrichten der Antriebswelle und Mitnehmerwelle beachtet werden. Es sind somit weniger Toleranzen zu beachten als im Stand der Technik, so dass eine Herstellung des Ventils wirtschaftlicher wird.

Zwischen einer Stellung des Antriebsrades und des Abtriebsrades, bei welcher der Abstand zwischen Antriebwelle und Mitnehmerwelle minimal ist und einer Stellung, bei welcher dieser Abstand maximal ist, ergibt sich der Hub für das Stellglied. Dieser Hub kann in Abhängigkeit der gewählten Exzentrizität des Antriebsrades und des Abtriebsrades bis zu dem doppelten Durchmesser des Antriebs- bzw. des Abtriebsrades betragen. Somit sind mit dem erfindungsgemäßen Ventil große Hübe realisierbar. Die Breite der Anordnung entspricht dem Durchmesser des Antriebs- bzw. Abtriebsrades. Dadurch wird in Breitenrichtung wenig Bauraum benötigt.

Gemäß einer bevorzugten Ausgestaltung der Erfindung ist das Mittel, welches einen Abstand zwischen einer Mittelachse des Antriebsrades und einer Mittelachse des Abtriebsrades konstant hält, ein Träger, welcher Lager zur Lagerung des Antriebrades und des Abtriebrades aufnimmt. Ein Träger im Sinne der vorliegenden Erfindung ist ein konstruktives Element, welches das Antriebs- und Abtriebsrad lagert. Vorzugsweise ist der Träger aus einer Platte hergestellt, von welcher orthogonal zwei Lagerstifte, die beabstandet zueinander vorgesehen sind, abragen. Jeder Lagerstift lagert eines der Antriebs- bzw. Abtriebsräder, so dass die Mittelachse des gelagerten Antriebs- bzw. Abtriebsrades koaxial mit der Ausrichtung des Lagerstiftes ist. Ein Träger hat den Vorteil, dass das Ventil besonders platzsparend angeordnet werden kann, da der Träger wenig Platz benötigt. Alternativ ist das Mittel ein Gehäuse, welches das Antriebsrad und das Abtriebsrad umgibt und drehbar über Lager lagert. Das Gehäuse ist vorzugsweise mit Ausnahme von Öffnungen für die exzentrisch verbundene Antriebswelle und die exzentrisch verbundene Mitnehmerwelle vollständig geschlossen ausgebildet. Ein solches Gehäuse hat den Vorteil, dass das Antriebs- und das Abtriebsrad vor äußeren Einflüssen, wie z.B. Verschmutzung geschützt sind.

Gemäß einer bevorzugten Weiterbildung der Erfindung sind für das Antriebsrad und das Abtriebsrad Zahnräder vorgesehen, welche ineinandergreifen. Beide Zahnräder besitzen eine identische Zähnezahl. Zahnräder haben den Vorteil, dass die ineinander greifenden Zahnräder eine formschlüssige Bewegungsübertragung ermöglichen, so dass eine relative Verdrehung zwischen den Zahnrädern nicht auftritt. Dadurch kann gewährleistet werden, dass eine Mittelachse des Stellgliedes zu jeder Zeit die Antriebswelle und die Mitnehmerwelle schneidet.

Querbelastungen auf das Stellglied werden dadurch vermieden. Alternativ können anstelle der Zahnräder auch Rollen eingesetzt werden, deren äußere Umfangsflächen aufeinander abrollen. In einer anderen Ausführung können anstelle der Zahnräder auch Räder eingesetzt werden, welche beabstandet zueinander sind und welche mit einem über Kreuz laufenden Riemen bzw. Zahnriemen oder einer über Kreuz laufenden Kette angetrieben sind.

Gemäß einer weiteren bevorzugten Ausführungsform der Erfindung ist der Drehantrieb ein elektromotorischer Drehantrieb. Ein elektromotorischer Drehantrieb kann sehr platzsparend vorgesehen werden und ermöglicht eine bedarfsabhängige Steuerung des Stellgliedes. Zusätzlich ermöglicht ein elektromotorischer Drehantrieb eine genaue Positionsregelung des Stellgliedes. Dadurch ist eine genauere Abgasregelung möglich, so dass die Schadstoffemission des Verbrennungsmotors reduziert wird.

Vorzugsweise ist das Stellglied ein Gasventil mit einem translatorisch geführten Ventilschaft und wenigstens einem Ventilteller. Unter einer translatorischen Bewegung im Sinne der Erfindung ist eine geradlinige Bewegung zu verstehen. Ein Ventilteller hat den Vorteil, dass dieser sehr gut mit dem Ventilsitz abschließt. Dadurch wird eine sehr hohe Dichtigkeit des Ventils erreicht.

In einer weiteren bevorzugten Ausführungsform der Erfindung ist ein Abgasstrom in Abhängigkeit von der Stellung des Ventiltellers regelbar. Dadurch ist eine genauere Abgasregelung möglich, so dass die Schadstoffemission des Verbrennungsmotors reduziert wird.

Gemäß einer bevorzugten Weiterbildung ist ein Wälzlager vorgesehen, welches die Mitnehmerwelle in einer mit dem Ventilschaft verbundenen Öse drehbar lagert. Das Wälzlager ist somit zwischen Mitnehmerwelle und Öse vorgesehen. Unter Öse im Sinne der Erfindung wird ein konstruktives Element verstanden, welches eine Bohrung aufweist, um einen Außenring des Wälzlagers aufzunehmen. Durch das Wälzlager wird die Reibung reduziert, so dass geringere Stellkräfte notwendig sind.

Vorzugsweise weist das Ventil eine Feder auf, welche den Ventilschaft umgibt und welche eine Federkraft zwischen der Öse und einem Ventilgehäuse aufbringt, so dass der Ventilteller in Richtung eines Ventilsitzes belastet ist. Während des Betriebes wird somit durch die Feder eine Rückstellung des Ventiltellers auf den Ventilsitz erzielt. Dadurch ist das Ventil Fail-safe, da auch bei einem Ausfall des elektromotorischen Drehtriebs der Ventilteller in eine Schließposition verbracht wird, so dass keine Abgase dem Verbrennungsmotor zugeführt werden.

Die Feder bringt zudem eine Federkraft auf die Öse auf, welche mit der Mitnehmerwelle verbunden ist. Die Mitnehmerwelle ist verbunden mit dem Abtriebsrad, so dass die Feder das Abtriebsrad über die Öse und die Mitnehmerwelle in Richtung des Antriebsrades belastet. Entsprechend kann die Feder auch dazu beitragen, dass ein Abstand zwischen dem Antriebsrad und dem Abtriebsrad konstant gehalten wird. Die Feder kann daher auch als Mittel verstanden werden, welches hilft einen Abstand zwischen einer Antriebsradmittelachse und einer Abtriebsradmittelachse konstant zu halten.

Gemäß einer bevorzugten Ausgestaltung weist das Ventilgehäuse eine Trennwand auf, an dessen einen Seite der Drehantrieb angeordnet ist und an dessen entgegengesetzter Seite das Antriebsrad, das Abtriebsrad und ein Ende des Ventilschafts angeordnet sind. Die Trennwand hat den Vorteil, dass der Drehantrieb vor Abwärme des Gases geschützt ist. Dies ist insbesondere wichtig für eine Verwendung des Ventils in einem Abgasventil.

Weitere Einzelheiten und Vorteile der vorliegenden Erfindung ergeben sich aus der nachfolgenden Beschreibung des Ausführungsbeispiels in Verbindung mit den Zeichnungen. In diesen zeigen:

Figur 1: Explosionszeichnung eines Abgasventils für einen Verbrennungsmotor nach der vorliegenden Erfindung,

Figur 2: Schnitt durch das Ventil nach Figur 1 in einer geschlossenen Stellung des Ventiltellers, und

Figur 3: Mechanik eines Exzenterzahnradgetriebes

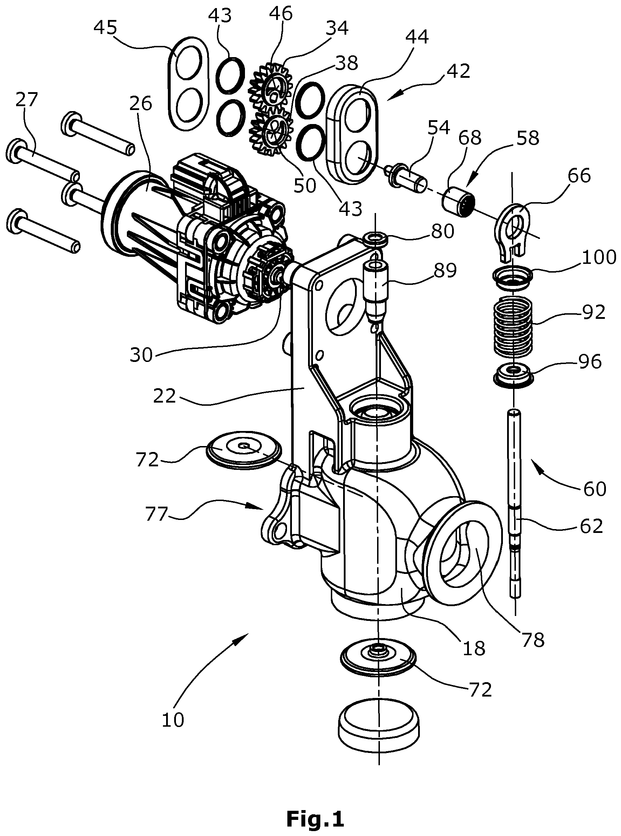

Figur 1 zeigt eine Explosionszeichnung eines Abgasventils 10 für einen Verbrennungsmotor nach der vorliegenden Erfindung. Das Abgasventil 10 weist ein Ventilgehäuse 18 auf, an welchem eine Trennwand 22 ausgebildet ist, die von dem Ventilgehäuse 18 abragt. An der Trennwand 22 ist ein elektrischer Drehantrieb 26 mittels Schrauben 27 angeschraubt. Der elektrische Drehantrieb 26 weist eine Antriebswelle 30 auf, welche exzentrisch mit einem Antriebszahnrad 34 mechanisch verbunden ist und dieses antreibt. Das Ventil 10 weist zudem ein Abtriebszahnrad 38 auf, welches mit dem Antriebszahnrad 34 in Eingriff ist. Das Antriebszahnrad 34 und das Abtriebszahnrad 38 sind in einem Gehäuse 42, mittels zwischen Antriebs- 34 bzw. Abtriebszahnrad 38 und Gehäuse 42 vorgesehenen Gleitringen 43, drehbar gelagert. Das Gehäuse 42 besteht aus einem Gehäusekörper 44, welcher mit einer Gehäuserückwand 45 verschweißt wird. Dieses Gehäuse 42 hält einen Abstand A zwischen einer Antriebsradmittelachse 46 und einer Abtriebsradmittelachse 50 konstant. Mit dem Abtriebszahnrad 38 ist exzentrisch eine Mitnehmerwelle 54 fest verbunden.

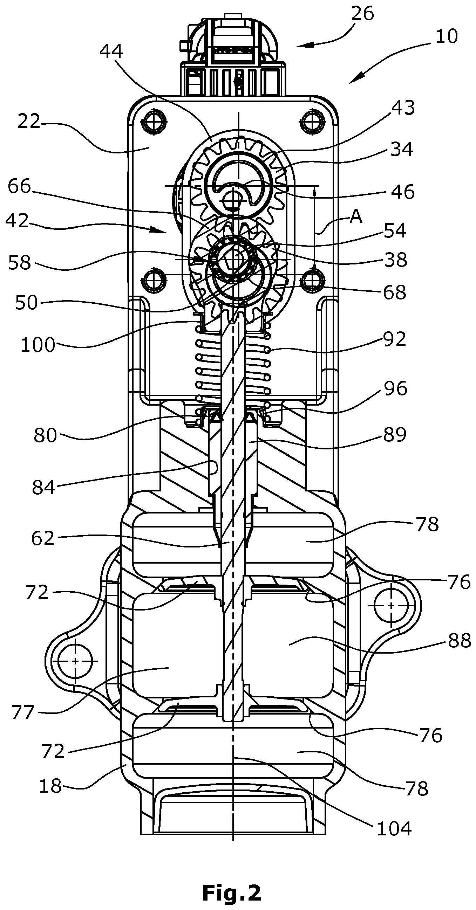

Das Ventil 10 weist zudem ein Wälzlager 58 auf, welches die Mitnehmerwelle 54 drehbar mit einem Stellglied 60 verbindet. Das Stellglied 60 umfasst einen Ventilschaft 62 und eine mit einem Ende des Ventilschafts fest verbundene Öse 66. Diese Öse 66 ist auf einen Außenring 68 des Wälzlagers 58 aufgeschoben. An einem der Öse 66 gegenüberliegenden Endbereich des Ventilschafts 62 sind beabstandet zueinander zwei Ventilteller 72 vorgesehen. Diese Ventilteller 72 wirken, in einer in Figur 2 gezeigten geschlossenen Stellung des Ventils 10, mit entsprechenden Ventilsitzen 76 des Ventilgehäuses 18 dichtend zusammen. In einer offenen Stellung der Ventilteller 72 wird ein Abgasstrom zwischen einem Einlass 77 und zwei Auslässen 78 des Ventilgehäuses 18 geregelt, die sich in Strömungsrichtung zu einem Auslass vereinen.

Zwischen Ventilgehäuse 18 und Ventilschaft 62 ist ein Dichtungselement 80 vorgesehen, welches eine Durchgangbohrung 84 zwischen Ventilschaft 62 und Ventilgehäuse 18 abdichtet, so dass kein Gas durch die Durchgangbohrung 84 aus einer daran anschließenden Ventilkammer 88 entweichen kann. Axial zwischen dem Dichtungselement 80 und der Ventilkammer 88 ist eine Gleitbuchse 89 in der Durchgangbohrung 84 vorgesehen, welche den Ventilschaft 62 gleitend lagert.

Das Ventil 10 umfasst zusätzlich eine Spiralfeder 92, welche um den Ventilschaft 62 vorgesehen ist. Diese Spiralfeder 92 liegt an einem auf dem Ventilgehäuse 18 aufliegenden gehäuseseitigen Federteller 96 und an einem auf der Öse 66 aufliegenden ösenseitigen Federteller 100 an. Die Spiralfeder 92 bringt eine Federkraft zwischen dem Ventilgehäuse 18 und der Öse 66 auf, so dass die Ventilteller 72 in Richtung der Ventilsitze 76 belastet sind.

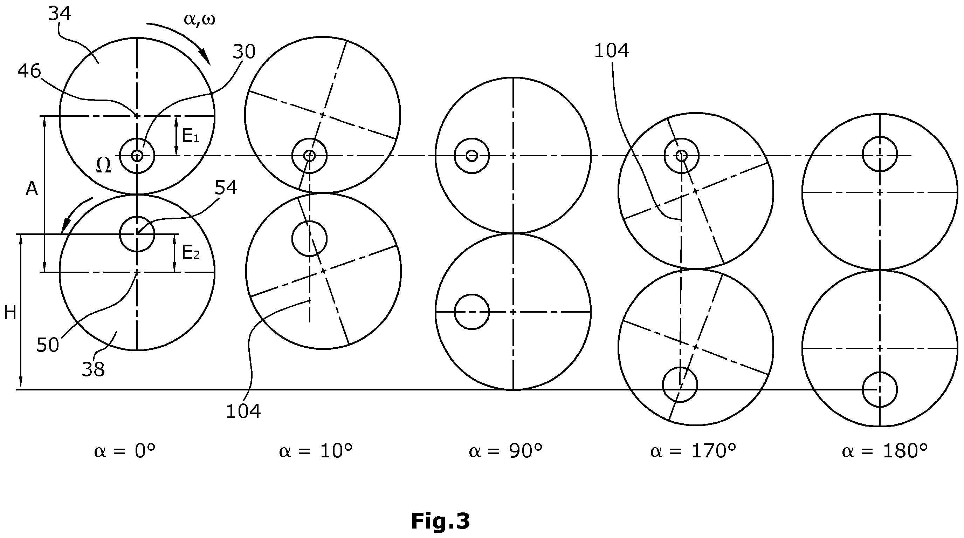

In Figur 3 ist die Mechanik des Exzenterzahnradgetriebes nach der vorliegenden Erfindung gezeigt. In dieser Figur ist dargestellt, wie sich ein Hub H für das Stellglied 60 einstellt. Dazu sind in Figur 3 verschiedene Drehwinkelpositionen $\alpha$ des Antriebszahnrades 34 und des Abtriebszahnrades 38 gezeigt. Das Antriebszahnrad 34, wird exzentrisch durch die feststehende Antriebswelle 30 des Drehantriebes 26 angetrieben. Bei einem Drehwinkel von $\alpha=0°$ ist das Stellglied 60 in einer Schließposition. In dieser Position ist der Ventilteller 72 maximal in Richtung des Ventilsitzes 76 bewegt, so dass der Ventilteller 72 auf dem Ventilsitz 76 aufliegt. Bei dem dargestellten Drehwinkel von $\alpha=10°$ hat sich der Ventilteller 72 bereits vom Ventilsitz 76 gelöst. Eine Mittelachse 104 des Stellgliedes 60 schneidet die Antriebswelle 30 und die Mitnehmerwelle 54. Bei den weiteren Drehwinkeln $\alpha$ bis 180° entfernt sich der Ventilteller 72 von dem Ventilsitz 76. Bei einem Drehwinkel $\alpha=180°$ hat der Ventilteller 72 eine Position erreicht, bei der der Ventilteller 72 maximal von dem Ventilsitz 76 entfernt ist. Während aller Winkelpositionen schneidet die Mittelachse 104 der des Stellgliedes 60 stets die Antriebswelle 30 und die Mitnehmerwelle 54. Der sich maximal ergebende Hub H für das Stellglied 60 ergibt sich aus einem Abstand zwischen einer Position der Mitnehmerwelle 54 bei einem Drehwinkel $\alpha=0°$ und einem Drehwinkel $\alpha=180°$. Dieser maximale Hub $H_{max}$ wird anhand der Exzentrizität $E_1$ des Antriebszahnrades und der Exzentrizität $E_2$ des Abtriebszahnrades nach folgender Formel berechnet:

$$H_{max}=2E_1+2E_2.$$

Das beschriebene Ventil benötigt einen sehr geringen Bauraum sowohl in axialer Richtung als auch senkrecht hierzu. Zur Herstellung und Montage des Ventils müssen wenige Toleranzen eingehalten werden, so dass das Ventil schneller und wirtschaftlicher herstellbar ist.

## Bezugszeichenliste

| | |
|---|---|
| 10 | Ventil |
| 18 | Ventilgehäuse |
| 22 | Trennwand |
| 26 | Drehantrieb |
| 27 | Schraube |
| 30 | Antriebswelle |
| 34 | Antriebszahnrad |
| 38 | Abtriebszahnrad |
| 42 | Gehäuse |
| 43 | Gleitringe |
| 44 | Gehäusekörper |
| 45 | Gehäuserückwand |
| 46 | Antriebsradmittelachse |
| 50 | Abtriebsradmittelachse |
| 54 | Mitnehmerwelle |
| 58 | Wälzlager |
| 60 | Stellglied |
| 62 | Ventilschaft |
| 66 | Öse |
| 68 | Außenring |
| 72 | Ventilteller |
| 76 | Ventilsitz |
| 77 | Einlass |
| 78 | Auslass |
| 80 | Dichtungselement |
| 84 | Durchgangbohrung |
| 88 | Ventilkammer |
| 89 | Gleitbuchse |
| 92 | Spiralfeder |
| 96 | gehäuseseitiger Federteller |
| 100 | ösenseitiger Federteller |
| 104 | Mittelachse |
| $\alpha$ | Drehwinkel |
| A | Abstand |
| H | Hub |
| $E_1$ | Exzentrizität des Antriebszahnrades |
| $E_2$ | Exzentrizität des Abtriebszahnrades |

## Patentansprüche

1. Ventil (10) für einen Verbrennungsmotor, wobei das Ventil (10) aufweist:

   ein Ventilgehäuse (18) mit einem Einlass (77) und einem Auslass (78),
   ein Stellglied (60), welches einen Durchströmungsquerschnitt radial innerhalb eines Ventilsitzes (76) zwischen dem Einlass (77) und dem Auslass (78) öffnet oder schließt,
eine Antriebswelle (30) eines Drehantriebes (26), welche ein Antriebsrad (34) exzentrisch dreht,
**dadurch gekennzeichnet, dass**
das Antriebsrad (34) mit einem gleich großen Abtriebsrad (38) bewegungsgekoppelt ist, wobei das Abtriebsrad (38) mit einer Mitnehmerwelle (54), die das Stellglied (60) betätigt, mechanisch verbunden ist und diese exzentrisch dreht, und
ein Mittel, welches einen Abstand (A) zwischen einer Antriebsradmittelachse (46) und einer Abtriebsradmittelachse (50) konstant hält, wobei eine Mittelachse (104) des Stellgliedes (60) die Antriebswelle (30) und die Mitnehmerwelle (54) schneidet.

2. Ventil (10) für einen Verbrennungsmotor nach Anspruch 1, **dadurch gekennzeichnet, dass** das Mittel, welches einen Abstand (A) zwischen einer Antriebsradmittelachse (46) und einer Abtriebsradmittelachse (50) konstant hält, ein Träger ist, der Lager zur Lagerung des Antriebrades (34) und des Abtriebrades (38) aufnimmt.

3. Ventil (10) für einen Verbrennungsmotor nach Anspruch 1, **dadurch gekennzeichnet, dass** das Mittel, welches einen Abstand (A) zwischen einer Antriebsradmittelachse (46) und einer Abtriebsradmittelachse (50) konstant hält, ein Gehäuse (42) ist, welches das Antriebsrad (34) und das Abtriebsrad (38) drehbar lagert.

4. Ventil (10) für einen Verbrennungsmotor nach einem der vorherigen Ansprüche, **dadurch gekennzeichnet, dass** das Antriebsrad (34) und das Abtriebsrad (38) Zahnräder sind, welche ineinandergreifen.

5. Ventil (10) für einen Verbrennungsmotor nach einem der vorherigen Ansprüche, **dadurch gekennzeichnet, dass** der Drehantrieb (26) ein elektromotorischer Drehantrieb ist.

6. Ventil (10) für einen Verbrennungsmotor nach einem der vorherigen Ansprüche, **dadurch gekennzeichnet, dass** das Stellglied (60) ein translatorisch geführter Ventilschaft (62) mit wenigstens einem Ventilteller (72) ist.

7. Ventil (10) für einen Verbrennungsmotor nach dem Anspruch 6, **dadurch gekennzeichnet, dass** das Ventil (10) ein Abgasventil ist, welches einen Abgasstrom in Abhängigkeit der Stellung des Ventiltellers (72) regelt.

8. Ventil (10) für einen Verbrennungsmotor nach Anspruch 6, **gekennzeichnet durch** ein Wälzlager (58), welches die Mitnehmerwelle (54) in einer mit dem translatorisch geführten Ventilschaft (62) verbundenen Öse (66) drehbar lagert.

9. Ventil (10) für einen Verbrennungsmotor nach dem Anspruch 8, **gekennzeichnet durch,** eine Feder (92), welche den Ventilschaft (62) umgibt und welche eine Federkraft zwischen der Öse (66) und dem Ventilgehäuse (18) aufbringt, so dass der Ventilteller (72) in Richtung eines Ventilsitzes (76) belastet ist.

10. Ventil (10) für einen Verbrennungsmotor nach Anspruch 6, **dadurch gekennzeichnet, dass** das Ventilgehäuse (18) eine Trennwand (22) aufweist, an dessen einen Seite der Drehantrieb (26) angeordnet ist und an dessen entgegengesetzter Seite das Antriebsrad (34), das Abtriebsrad (38) und ein Ende des Ventilschafts (62) angeordnet sind.


## Claims

1. Valve (10) for an internal combustion engine, wherein the valve (10) comprises:

   a valve housing (18) with an inlet (77) and an outlet (78),
   an actuating element (60) which opens or closes a flow cross section radially inward of a valve seat (76) between the inlet (77) and the outlet (78),
   a drive shaft (30) of a rotary drive (26), which shaft eccentrically rotates a drive wheel (34),
   **characterized in that**
   the drive wheel (34) is movement coupled to an equally large output gear (38), wherein the output gear (38) is mechanically coupled to and rotates eccentrically with a driver shaft (54) actuating the actuating element (60), and
   means keeping a distance (A) between a drive wheel center axis (46) and a driven wheel center axis (50) constant, wherein
   a center axis (104) of the actuating element (60) intersects the drive shaft (30) and the driver shaft (54).

2. Valve (10) for an internal combustion engine according to claim 1, **characterized in that** the means which maintains a distance (A) between a drive wheel center axis (46) and an driven wheel center axis (50) constant, is a carrier receiving bearings for supporting the drive wheel (34) and the driven wheel (38).

3. Valve (10) for an internal combustion engine according to claim 1, **characterized in that** the means maintaining a distance (A) between a drive wheel center axis (46) and an driven wheel center axis (50) constant, is a housing (42) rotatably supporting the drive wheel (34) and the driven wheel (38) rotatably supports.

4. Valve (10) for an internal combustion engine according to one of the preceding claims, **characterized in that** the drive wheel (34) and the driven wheel (38) are meshing gears.

5. Valve (10) for an internal combustion engine according to one of the preceding claims, **characterized in that** the rotary drive (26) is an electromotive rotary drive.

6. Valve (10) for an internal combustion engine according to one of the preceding claims, **characterized in that** the actuating element (60) is a translationally guided valve stem (62) with at least one valve plate (72).

7. Valve (10) for an internal combustion engine according to claim 6, **characterized in that** the valve (10) is an exhaust gas valve which regulates an exhaust gas flow as a function of the position of the valve plate (72).

8. Valve (10) for an internal combustion engine according to claim 6, **characterized by** a roller bearing (58) which rotatably supports the driver shaft (54) in an eyelet (66) connected to the translationally guided valve stem (62).

9. Valve (10) for an internal combustion engine according to claim 8, **characterized by** a spring (92) surrounding the valve stem (62) and applying a spring force between the eyelet (66) and the valve housing (18) such that the valve plate (72) is biased towards a valve seat (76).

10. Valve (10) for an internal combustion engine according to claim 6, **characterized in that** the valve housing (18) has a partition wall (22), on one side of which the rotary drive (26) is arranged and on the opposite side of which the drive wheel (34), the driven wheel (38) and one end of the valve stem (62) are arranged.

**Revendications**

1. Vanne (10) pour moteur à combustion interne, la vanne (10) comportant:

   un carter de vanne (18) avec une entrée (77) et une sortie (78),
   un actionneur (60) ouvrant ou fermant une section d'écoulement radialement à l'intérieur d'un siège de vanne (76) entre l'entrée (77) et la sortie (78),
   un arbre d'entrainement (30) d'un entrainement rotatif (26), ledit arbre faisant tourner de manière excentrique une roue motrice (34),
   **caractérisé en ce que**
   la roue motrice (34) est couplée de manière mobile avec une roue de sortie (38) également grande (38), ladite roue de sortie (38) étant couplée mécaniquement et tournant de manière excentrique avec un arbre entraineur (54) actionnant l'actionneur (60), et
   un moyen maintenant constante une distance (A) entre un axe central de la roue motrice (46) et un axe central de roue de sortie (50),
   dans lequel un axe central (104) de l'actionneur (60) croise l'arbre d'entrainement (30) et l'arbre entraineur (54).

2. Vanne (10) pour moteur à combustion interne selon la revendication 1, **caractérisée en ce que** le moyen qui maintient constante une distance (A) entre un axe central de la roue motrice (46) et un axe central de roue de sortie (50), est un support recevant des paliers pour supporter la roue motrice (34) et la roue de sortie (38).

3. Vanne (10) pour moteur à combustion interne selon la revendication 1, **caractérisée en ce que** le moyen qui maintient constante une distance (A) entre un axe central de la roue motrice (46) et un axe central de roue de sortie (50), est un carter (42) supportant la roue motrice (34) et la roue sortie (38) de manière rotative.

4. Vanne (10) pour moteur à combustion interne selon l'une quelconque des revendications précédentes, **caractérisée en ce que** la roue motrice (34) et la roue de sortie (38) sont des roues qui s'engrènent.

5. Vanne (10) pour moteur à combustion interne selon l'une des revendications précédentes, **caractérisée en ce que** l'entrainement en rotation (26) est un entrainement en rotation électromoteur.

6. Vanne (10) pour moteur à combustion interne selon l'une des revendications précédentes, **caractérisée en ce que** l'actionneur (60) est une tige de vanne guidée en translation (62) ayant au moins une tête de vanne (72).

7. Vanne (10) pour moteur à combustion interne selon la revendication 6, **caractérisée en ce que** la vanne (10) est une vanne de gaz d'échappement qui contrôle un flux de gaz d'échappement en fonction de la position de la tête de vanne (72).

8. Vanne (10) pour moteur à combustion interne selon la revendication 6, **caractérisée par** un roulement (58) qui supporte de manière rotative l'arbre d'entrainement (54) dans un œillet (66) relié à la tige de vanne (62) guidée en translation.

9. Vanne (10) pour moteur à combustion interne selon la revendication 8, **caractérisée par** un ressort (92) entourant la tige de vanne (62) et appliquant une force de ressort entre l'œillet (66) et le boitier de vanne (18) de sorte que la tête de vanne (72) est sollicitée vers un siège de vanne (76).

10. Vanne (10) pour moteur à combustion interne selon la revendication 6, **caractérisée en ce que** le boitier de vanne (18) a une cloison (22), l'entrainement en rotation (26) étant disposé sur l'un côté et la roue motrice (34), le roue de sortie (38) et une extrémité de la tige de vanne (62) étant disposés sur l'autre côté de la cloison.

**Fig.1**

**Fig.2**

α = 0°          α = 10°          α = 90°          α = 170°          α = 180°

**Fig.3**

EP 3 359 798 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1362985 A2
- KR 20120042120 A
- EP 1477062 A1
- WO 2009124809 A1